# EUROPÄISCHE PATENTSCHRIFT

(11) **EP 2 729 712 B1**
(45) Veröffentlichungstag und Bekanntmachung des Hinweises auf die Patenterteilung: **11.09.2019**
(21) Anmeldenummer: 12732637.9
(22) Anmeldetag: 02.07.2012
(51) Int. Cl.: F16C 23/08, F16C 33/78, B63B 39/06, F16C 19/38

(54) **PENDELROLLENLAGER MIT DICHTUNGSANORDNUNG SOWIE FLOSSENSTABILISATOR MIT DEM PENDELROLLENLAGER**
SPHERICAL ROLLER BEARING WITH SEALING ASSEMBLY AND FIN STABILIZER WITH THE SPHERICAL ROLLER BEARING
ROULEMENT À ROTULE SUR ROULEAUX AVEC DISPOSITIF D'ÉTANCHÉITÉ ET AILETTE DE STABILISATION AVEC LE ROULEMENT À ROTULE SUR ROULEAUX

(30) Priorität: 08.07.2011 DE 102011078840
(43) Veröffentlichungstag der Anmeldung: 14.05.2014
(73) Patentinhaber: Schaeffler Technologies AG & Co. KG, 91074 Herzogenaurach (DE)
(72) Erfinder: BREETZMANN, Philipp, 91058 Erlangen (DE); BERESCH, Eduard, 97529 Sulzheim (DE)
(86) Internationale Anmeldenummer: PCT/EP2012/062791
(87) Internationale Veröffentlichungsnummer: WO 2013/007545

(56) Entgegenhaltungen:
- WO-A1-2012/069458
- DE-A1- 2 923 630
- DE-A1- 3 738 111
- DE-A1- 3 926 493
- DE-A1-102007 036 891
- DE-A1-102009 014 923
- DE-B- 1 267 127
- JP-A- 2000 043 785
- US-A- 4 872 770

## Beschreibung

Die Erfindung betrifft einen Flossenstabilisator für ein Schiff mit einem Pendelrollenlager, wobei das Pendelrollenlager einen Innenring, einen Außenring und eine Mehrzahl von Rollen umfasst, wobei Innenring und Außenring gemeinsam einen Wälzkörperraum bilden, in dem die Rollen angeordnet sind.

Ein derartiger Flossenstabilisator ist aus der Druckschrift DE 29 23 630 A1 bekannt, die den nächstkommenden Stand der Technik darstellt. Dort ist zur Aufnahme einer ein Riemenblatt tragenden Welle ein drehbares Gehäuse vorgesehen. Die Welle ist mittels Rollenlagern in dem Gehäuse gelagert. In einer der Ausführungsformen sind die Rollenlager als Pendelrollenlager dargestellt. Das Gehäuse ist zur Sicherstellung der Schmierung der Lager mit Öl gefüllt.

Pendelrollenlager weisen als eine besondere Ausführungsform von Wälzlagern üblicherweise einen Innenring, einen Außenring sowie zwischen Innenring und Außenring angeordnete Rollen auf, die an dem Innenring und Außenring abwälzen. In einer üblichen Bauform sind die Rollen zweireihig angeordnet und als Tonnenrollen realisiert. Die Laufbahnen der Ringe sind so ausgebildet, dass der Innenring zu dem Außenring in Bezug auf eine Drehachse verschwenkt werden kann. Pendelrollenlager werden üblicherweise eingesetzt, wenn die Lageranordnung eine gewisse Winkeltoleranz zwischen Stützkonstruktion und Welle erlauben muss.

In der Druckschrift DE 10 2007 036 891 A1 ist eine Lagerung einer Hauptwelle einer Windkraftanlage offenbart, wobei die Lagerung mindestens ein Pendelrollenlager umfasst. In dem Pendelrollenlager sind unmittelbar an den Ringen Dichtmittel zum Abdichten eines die Rollen des Pendelrollenlagers beinhaltenden Raumes angeordnet. Die Dichtmittel sind in den Außenringen eingesteckt und in einem Längsschnitt entlang der Drehachse gewellt ausgeführt.

Die Druckschrift DE 60306638 T2 betrifft ein abgedichtetes Pendelrollenlager für eine Kratzbagger-Schwenkwelle. Das Pendelrollenlager weist seitlich einen Kontaktlippendichtungsträger auf, der eine Kontaktlippendichtung trägt, wobei der Kontaktlippendichtungsträger an dem Außenring des Pendelrollenlagers angeschraubt ist. Die Kontaktlippendichtung bildet gemeinsam mit einem Dichtungstragring, der benachbart zu dem Innenring angeordnet ist, einen Dichtungsbereich, der den Wälzkörperraum abdichtet.

Aus der Druckschrift JP 2000043785 A ist eine Flossenstabilisatorwälzlagervorrichtung offenbart. Ein Schrägrollenlager ist zwischen einer drehenden Welle und einer oberen Wälzlagerhalterung angeordnet.

Die Druckschrift DE 37 38 111 A1 beschreibt ein Wälzlager, wobei an einem der beiden Laufringe des Wälzlagers ein elastisches Dichtelement befestigt ist, dessen nichtbefestigter Rand auf dem zweiten Laufring mittels einer eigenen Wälzlageranordnung geführt ist.

Aus der Druckschrift US 4 872 770 A ist ein Wälzlager bekannt, wobei an jedem axialen Ende des Lagers eine Endabdichtung vorgesehen ist. Ein Ringraum ist durch mit axialem Abstand angeordneten, ringförmigen Dichtungsgliedern abgedichtet, wobei jedes Dichtungsglied sich von dem Außenumfang des inneren Laufrings zu dem äußeren Laufring hin, längs einer sich radial erstreckenden Endfläche des äußeren Laufrings und teilweise über den Außenumfang des äußeren Laufrings erstreckt.

Die Druckschrift WO 2012/069458 A1 offenbart ein Wälzlager mit einem ersten Lagerring und einen dem ersten Lagerring in einer radialen Richtung gegenüberliegenden zweiten Lagerring. Ein Dichtelement des Wälzlagers umfasst einen an einer axialen Stirnfläche des ersten Lagerrings formschlüssig und demontierbar befestigten, radial umlaufenden und sich in der radialen Richtung um eine vorbestimmte Strecke in Richtung des zweiten Lagerrings erstreckenden Dichtungsträger sowie eine Dichtlippe, die an dem Dichtungsträger angebracht ist und sich von einem dem ersten Lagerring in der radialen Richtung gegenüberliegenden Ende des Dichtungsträgers bis zu einer Gegenlauffläche erstreckt, welche Teil des zweiten Lagerrings ist.

Die Druckschrift DE 39 26 493 A1 beschreibt eine Maschine mit wenigstens einer angetriebenen Welle, die in zwei in einem Maschinenrahmen angeordneten Lagern gelagert ist. Diese Lager enthalten jeweils einen Innenring, einen Außenring sowie dazwischen angeordnete Wälzkörper. Zur Abdichtung des zwischen Innenring und Außenring gebildeten Lagerinnenraumes sind zwei seitliche, am Außenring des Lagers befestigte Lagerabschlussdeckel sowie Dichtungselemente vorgesehen, wobei die Dichtungselemente mit dem Innenring des Lagers zusammenwirken. Die Maschine ist z. B. als Walzenmühle zur Zerkleinerung von sprödem Mahlgut ausgebildet.

Es ist Aufgabe der vorliegenden Erfindung, einen Flossenstabilisator für ein Schiff mit einem Pendelrollenlager vorzuschlagen, das in dem Flossenstabilisator in einfacher Weise integriert werden kann.

Diese Aufgabe wird durch einen Flossenstabilisator mit den Merkmalen des Anspruchs 1 gelöst. Vorteilhafte oder bevorzugte Ausführungsformen der Erfindung ergeben sich aus den Unteransprüchen, der nachfolgenden Beschreibung sowie den beigefügten Figuren.

Besonders bevorzugt ist das Pendelrollenlager als ein Großlager mit einem Außendurchmesser größer als 500 mm, vorzugsweise größer als 700 mm und insbesondere größer als 1.000 mm ausgebildet.

Das Pendelrollenlager umfasst einen innenring, welcher bevorzugt einteilig ausgebildet ist, sowie einen Außenring, welcher ebenfalls bevorzugt einteilig ausgebildet ist. Zwischen dem Innenring und dem Außenring ist ein Wälzkörperraum gebildet, in dem eine Mehrzahl von Rollen, insbesondere Tonnenrollen, angeordnet sind. Der Außenring weist bevorzugt eine hohlkugelige Laufbahn für die Rollen, insbesondere die Tonnenrollen auf. Die Rollen sind bevorzugt zweireihig angeordnet und/oder in einem Käfig gehalten. Durch diesen Aufbau ist das Pendelrollenlager geeignet, Winkelfehler oder Fluchtungsfehler sowie Wellendurchbiegungen der Lagersitzstellen auszugleichen. Beispielsweise können Winkelfehler von größer als 0,5 Grad und insbesondere bis zu 1,5 Grad oder 2 Grad ausgeglichen werden.

Der Wälzkörperraum ist vorzugsweise beidseitig jeweils mit einer Dichtungsanordnung gegenüber der Umgebung abgedichtet. Die Dichtung hat insbesondere die Aufgabe, den Wälzkörperraum gegenüber Verschmutzungen von außen abzudichten. Das Pendelrollenlager ist mit Schmierfett gefüllt, so dass die Dichtungsanordnung zudem die Aufgabe hat, gegen austretendes Schmierfett abzudichten. Die Dichtungsanordnung ist auf jeder Seite des Pendelrollenlagers mindestens zweiteilig aufgebaut und umfasst einen Dichtungsträgerabschnitt, der eine Trägerfunktion umsetzt, sowie einen Dichtungsabschnitt, der die eigentliche Dichtungsfunktion umsetzt und an dem Dichtungsträgerabschnitt angeordnet und befestigt ist.

Der Dichtungsträgerabschnitt ist mittels einer Schraubverbindung an dem Außenring angeschraubt. Die Schraubverbindung ist beispielsweise durch eine Mehrzahl von Schrauben realisiert, die in Umlaufrichtung um eine Drehachse des Pendelrollenlagers angeordnet und in den Außenring eingeschraubt sind. Somit ist der Dichtungsabschnitt über den Dichtungsträgerabschnitt an dem Außenring mit der Schraubverbindung befestigt. Besonders bevorzugt ist der Dichtungsabschnitt kontaktfrei und/oder beabstandet zu dem Außenring positioniert.

Im Rahmen der Erfindung wird vorgeschlagen, dass der Dichtungsabschnitt mit dem Innenring einen Dichtbereich bildet. Somit bildet der Dichtungsabschnitt eine erste Dichtungsfläche und der Innenring eine zweite Dichtungsfläche, wobei erste und zweite Dichtungsfläche gemeinsam die Dichtungsstelle des Dichtbereichs bilden. Der Dichtungsabschnitt kann beispielsweise kontaktierend auf oder an dem Innenring aufliegen und so den Dichtbereich bilden. Alternativ kann vorgesehen sein, dass der Dichtungsabschnitt als eine so genannte kontaktfreie Dichtung mit dem Innenring den Dichtbereich bildet. Insbesondere ist der Dichtbereich umlaufend um die Drehachse des Pendelrollenlagers ausgebildet.

Der Vorteil der Erfindung ist insbesondere darin zu sehen, dass durch die Anordnung des Dichtbereichs an den Innenring des Pendelrollenlagers die Integration des Pendelrollenlagers deutlich vereinfacht wird. So müssen - im Vergleich zum eingangs genannten Stand der Technik - keine zusätzlichen Dichtungstragringe neben dem Innenring montiert werden. Besonders bevorzugt ist das Pendelrollenlager als eine selbsthaltende und einbaufertige Baueinheit ausgebildet, welche inklusive der Dichtungsanordnung montiert werden kann. Neben der Vereinfachung der Montage ergeben sich Kostenvorteile durch Einsparung der zusätzlichen Dichtungstragringe.

Besonders bevorzugt ist der Dichtungsabschnitt als eine Lippendichtung mit mindestens einer Lippe ausgebildet, die auf dem Innenring aufliegt.

Insbesondere liegt der Dichtungsabschnitt und/oder die Lippendichtung auf einer radialen Außenfläche des Innenrings auf. Insbesondere stützt sich der Dichtungsabschnitt in radialer Richtung von dem Innenring ab. Besonders bevorzugt liegt der Dichtungsabschnitt auf einem Seitenbord des Innenrings auf, so dass dieser Seitenbord eine Doppelfunktion, nämlich die Führung der angrenzenden Rollen und Träger der Dichtfläche für den Dichtbereich umsetzt. Besonders bevorzugt ist diese radiale Außenfläche und/oder Auflagebereich des Dichtungsabschnitts drallfrei geschliffen, um Pumpwirkungen aufgrund von Drehriefen im Dichtbereich zu vermeiden. Durch diese Ausgestaltung wird der benötigte Bauraum für den Dichtungsabschnitt in einen Bereich verlagert, der von dem Innenring in radialer Richtung überlappt wird und somit in axialer Richtung nicht zusätzlich aufbaut.

Bei einer besonders bevorzugten Ausführungsform der Erfindung umfasst der Dichtungsträgerabschnitt einen Ringscheibenabschnitt aus Metall. Durch diese Ausgestaltung ist es möglich, die Dichtungsanordnung sehr starr zu gestalten. Insbesondere erstreckt sich der Ringscheibenabschnitt in stirnseitiger Draufsicht bis in den Wälzkörperraum, insbesondere bis unterhalb des Teilkreises der Wälzkörper. Durch den radial langen Verlauf des Dichtungsträgerabschnitts wird eine hohe Steifigkeit erreicht. An dem radialen Innenrand des Ringscheibenabschnitts ist der Dichtungsabschnitt, insbesondere die Lippendichtung, angeordnet. Insbesondere weist der Ringscheibenabschnitt eine Materialdicke von mehr als 1 mm, insbesondere 2 mm auf.

Bei einer besonders bevorzugten Ausführungsform der Erfindung liegt der Dichtungsträgerabschnitt, insbesondere der Ringscheibenabschnitt auf der Stirnseite des Außenrings auf. Durch diese Gestaltung kann der Dichtungsträgerabschnitt sehr einfach ausgestaltet werden, ferner verfügt der Dichtungsträgerabschnitt über eine sehr breite Auflagefläche auf dem Außenring.

Bei einer besonders bevorzugten Ausführungsform der Erfindung ist der Außenring in axialer Erstreckung kürzer als der Innenring ausgebildet. Durch das Zurücksetzen des Außenrings in axialer Richtung gegenüber dem Innenring wird ein freier Bereich, insbesondere ein Ringscheibenbereich geschaffen, in den die Dichtungsanordnung zumindest versenkt angeordnet werden kann. Diese Ausführungsform ermöglicht, dass sich die Dichtungsanordnung in radialer Richtung ohne Ausbeulungen oder Auslenkungen in axialer Richtung erstrecken kann.

Besonders bevorzugt ist es sogar, wenn die Dichtungsanordnung mit dem Innenring in axialer Richtung bündig abschließt oder sogar axial nach innen versetzt angeordnet ist. In diesem Fall ist der benötigte Bauraum für das Pendelrollenlager durch den Innenring definiert. Das erfindungsgemäße Pendelrollenlager kann bauraumneutral gegen ein anderes Lager mit der gleichen Innenringbreite ausgetauscht werden. Gerade bei einem Austausch eines anderen Lagers oder eines nicht abgedichteten Pendelrollenlagers mit dem erfindungsgemäßen Pendelrollenlager ist es vorteilhaft, dass der Innenring durch die Dichtungsanordnung nicht vergrößert wird, um die Bauraumneutralität zu erreichen.

Bei einer bevorzugten Weiterbildung der Erfindung weist das Pendelrollenlager mindestens eine umlaufende Dichtung, vorzugsweise zwei umlaufende, insbesondere statische Dichtungen auf, welche zur Abdichtung des Außenrings zu einer Tragkonstruktion, insbesondere eines Gehäuses dienen. Die umlaufende Dichtung ist beispielsweise als eine Schnurdichtung oder O-Ringdichtung realisiert und wird beispielsweise in die Drehachse umlaufende Nuten oder Aussparungen in dem Außenring eingelegt.

Bei einer bevorzugten Weiterbildung der Erfindung nimmt die umlaufende Dichtung eine Doppelfunktion ein, wobei diese ergänzend den Dichtungsträgerabschnitt gegenüber dem Außenring abdichtet. Die umlaufende Dichtung hat somit drei Dichtflächen, nämlich den Dichtungsträgerabschnitt, den Außenring sowie die Tragkonstruktion. In diesem Fall ist die Aussparung zur Aufnahme der umlaufenden Dichtung in einem axialen Randbereich des Außenrings angeordnet und/oder in axialer Richtung geöffnet.

Gegenstand der Erfindung ist ein Flossenstabilisator mit einer schwenkbaren Flosse für ein Schiff mit den Merkmalen des Anspruchs 1. Derartige Flossenstabilisatoren werden bei Schiffen eingesetzt, um eine Rollbewegung um eine Längsachse des Schiffes zu vermeiden. An dem Schiffsrumpf werden beispielsweise gegenüberliegend jeweils ein Flossenstabilisator mit einer schwenkbaren Flosse angeordnet, welche in grober Näherung wie ein Flügel aussehen. Durch eine Schwenkung der Flossen um deren Längsachse kann der Rollbewegung des Schiffs effektiv entgegen gewirkt werden. Ein derartiger Flossenstabilisator ist beispielsweise in der Druckschrift DE1267127 aus dem Jahr 1967 gezeigt.

Im Rahmen der Erfindung wird die Schwenkbewegung der Flosse über das Pendelrollenlager gelagert. Besonders bevorzugt ist die Schwenkwelle der Flosse bzw. der Flossenschaft über zwei derartige Pendelrollenlager, wie sie zuvor beschrieben wurden, gelagert.

Im Rahmen der Erfindung wird vorgeschlagen, dass der Wälzkörperraum des Pendelrollenlagers mit Schmierfett gefüllt ist. Im Gegensatz zu üblichen Schmierungen durch Schmieröl hat die Verwendung von Schmierfett den Vorteil, dass die Gefahr von Umweltschädigungen bei Leckagen deutlich verringert ist. In den Ölkreisläufen von Flossenstabilisatoren werden bis zu 2.500 Liter Schmieröl verwendet, die bei einem Austritt stark umweltschädigend wären. Dagegen hat die Fettschmierung den Vorteil, dass das Schmierfett zum einen durch die beschriebene Dichtungsanordnung sicher zurückgehalten wird, und wenn, nur in den Schiffsinnenraum austreten kann, und zum anderen nicht die Neigung hat, auszulaufen.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigen:
- Figur 1: einen schematischen Längsschnitt durch ein Pendelrollenlager als ein Ausführungsbeispiel der Erfindung;
- Figur 2: eine schematische Darstellung eines Flossenstabilisators mit dem Pendelrollenlager als weiteres Ausführungsbeispiel der Erfindung.

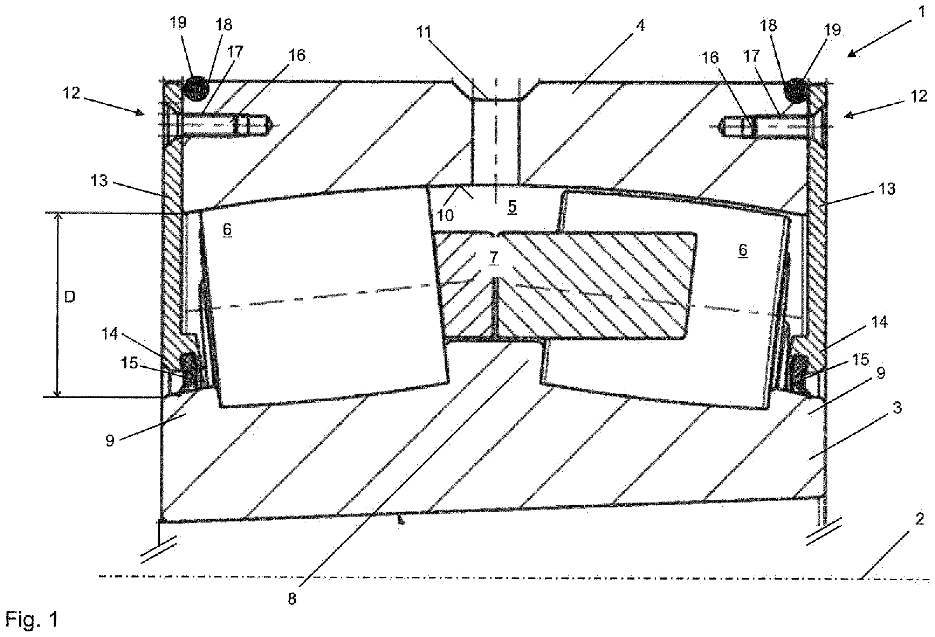

In der Figur 1 ist ein Pendelrollenlager 1 in einer schematischen Längsschnittdarstellung entlang einer Drehachse 2 des Pendelrollenlagers 1 dargestellt. Das Pendelrollenlager weist einen Innenring 3 und einen Außenring 4 auf, welche zusammen einen Wälzkörperraum 5 bilden, in dem zwei Reihen mit Wälzkörpern 6 in einem Käfig 7 angeordnet sind. Die Rollen 6 sind als Tonnenrollen ausgebildet.

Der Innenring 3 ist als ein massiver, einteiliger Ring ausgebildet und weist einen integrierten und/oder angeformten Mittelbord 8 sowie zwei integrierte und/oder angeformte Seitenborde 9 auf. Zwischen Mittelbord 8 und den Seitenborden 9 verlaufen Laufbahnen für die Wälzkörper 6.

Der Außenring 4 ist ebenfalls einstückig ausgebildet und weist eine hohlkugelförmige, gemeinsame Laufbahn 10 für die Rollen 6 auf. Das Pendelrollenlager 1 ist aufgrund der Rollengeometrie und der Laufbahngeometrie in der Lage, durch ein Verkippen von Innenring 3 und Außenring 4 Fluchtungsfehler auszugleichen. Mittig ist in dem Außenring 4 eine Schmierbohrung 11 eingebracht, welche ein Einpressen von Schmierfett in den Wälzkörperraum 5 ermöglicht.

Stirnseitig ist jeweils eine Dichtungsanordnung 12 aufgesetzt, welche den Wälzkörperraum 5 gegenüber der Umgebung abdichtet. Die Dichtungsanordnung 12 umfasst einen Dichtungsträgerabschnitt 13, welcher als eine Ringscheibe ausgebildet ist oder einen entsprechenden Abschnitt aufweist und sich von der radialen Außenseite des Außenrings 4 bis in den Wälzkörperraum 5 erstreckt. An dem radialen Innenrand des Dichtungsträgerabschnitts 13 ist eine Dichtungsaufnahme 14 einstückig angeformt, in die eine Lippendichtung 15 eingesetzt ist. Bis auf die Dichtungsaufnahme ist der Dichtungsträgerabschnitt plan oder eben ausgebildet.

Die Lippendichtung 15 ist in stirnseitiger Draufsicht ebenfalls als ein Ring ausgebildet und ist in ihrer radialen Erstreckung auf weniger als die Hälfte des Wälzkörperraums 5 begrenzt. Die Lippendichtung 15 ist so orientiert, dass diese ein Eindringen von Verschmutzungen von außen verhindert, dagegen ein Austreten von Schmierfett - zum Beispiel beim Einpressen von frischem Schmierfett in die Schmierbohrung 11 - ermöglicht.

Die Lippendichtung 15 liegt mit ihrem freien Ende (Lippe) radial innenseitig auf den Seitenborden 9 auf. Um eine ungewollte Pumpwirkung durch eine Relativrotation von Dichtungsanordnung 12 und Innenring 3 zu unterbinden, ist der Auflagebereich der Lippendichtung 15 auf dem Seitenbord 9 von drallfrei geschliffen.

Bezeichnet man den Durchmesserunterschied des Wälzkörperraums 5 mit D, so nimmt der Dichtungsträgerabschnitt 13 mindestens 60 %, vorzugsweise mindestens 70 % der Länge D in Anspruch, wohingegen sich die Lippendichtung über einen geringen Teil von weniger als 30 % oder 20% des Durchmesserunterschieds D erstreckt. Der Dichtungsträgerabschnitt 13 ist starr, insbesondere aus Metall, z.B. aus Stahl gefertigt, und weist eine Materialdicke von mindestens 1 mm vorzugsweise mindestens 2 mm auf, so dass sich durch die Materialauswahl, Materialdicke und die konstruktive Verteilung eine sehr steife Konstruktion ergibt.

Das Pendelrollenlager 1 weist einen freien Innendurchmesser von beispielsweise 400 mm bis 500 mm oder mehr und einen Außendurchmesser von 600 mm bis 1.300 mm oder mehr auf. Somit ist der Teilkreisdurchmesser des Pendelrollenlagers beispielsweise größer als 750 mm.

In der axialen Erstreckung entlang der Drehachse 2 ist der Außenring 4 schmaler ausgebildet als der Innenring 3. Der ausgesparte axiale Bereich wird durch die Dichtungsanordnung 12 ausgefüllt, so dass das Pendelrollenlager 1 in axialer Richtung bündig mit dem Innenring 3 abschließt. Durch die Verkleinerung der axialen Erstreckung des Außenrings 4 wird erreicht, dass das Pendelrollenlager 1 gegen ein anderes Lager ausgetauscht werden kann, welches die gleiche axiale Abmessung wie der Innenring 3 aufweist, da das Pendelrollenlager 1 bauraumneutral ausgeführt ist.

Für eine sichere Befestigung der Dichtungsanordnung 12, insbesondere des Dichtungsträgerabschnitts 13 an dem Außenring 4 weist das Pendelrollenlager 1 eine umlaufende Reihe von Schrauben 16 auf, welche durch Öffnungen in den Dichtungsträgerabschnitt 13 in Gewinde 17 in dem Außenring 4 eingeschraubt sind. In dem axial äußeren Bereich liegt der Dichtungsträgerabschnitt 13 vollflächig auf dem Außenring 4 stirnseitig auf.

Der Außenring 4 weist im axialen Randbereich Aufnahmen 18 für Dichtungen 19, welche umlaufend ausgebildet sind, auf, und die beispielsweise als Schnurdichtungen oder O-Ringdichtungen ausgebildet sein können. Die Aufnahmen 18 sind so ausgebildet, dass die Dichtungen 19 zum einen Außenring 4 und Dichtungsträgerabschnitt 13 zueinander im Bereich der Dichtung 19 abdichten. Zudem sind die Dichtungen 19 so ausgeführt, dass diese eine Abdichtung zwischen Außenring 4/Dichtungsträgerabschnitt 13 einerseits und einer Trägerkonstruktion bzw. einem Gehäuse umsetzen.

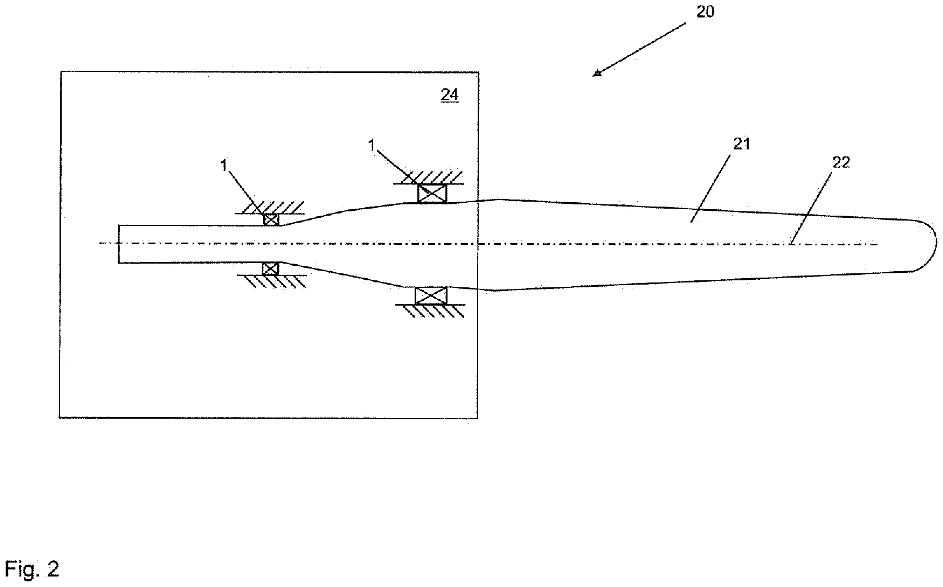

Die Figur 2 zeigt in einer stark schematisierten Darstellung einen Flossenstabilisator 20, wie er bei Schiffen eingesetzt wird, um eine Rollbewegung des Schiffes um die Längsachse des Schiffes zu dämpfen. Der Flossenstabilisator 20 weist eine Flosse 21 auf, die schematisiert in einer Draufsicht von vorne dargestellt ist. Die Flosse 21 kann um eine Flossenachse 22 geschwenkt werden, um die Rollbewegung des Schiffes zu dämpfen. Die Flosse 21 bzw. ein Flossenschaft 23 ist schiffsseitig in einem Gehäuse 24 gelagert und zwar über zwei Pendelrollenlager 1 nach einer Bauart, wie diese zuvor in der Figur 1 dargestellt wurde.

### Bezugszeichenliste

- 1: Pendelrollenlager
- 2: Drehachse
- 3: Innenring
- 4: Außenring
- 5: Wälzkörperraum
- 6: Wälzkörper, Rollen
- 7: Käfig
- 8: Mittelbord
- 9: Seitenbord oder Außenbord
- 10: Laufbahn
- 11: Schmierbohrung
- 12: Dichtungsanordnung
- 13: Dichtungsträgerabschnitt
- 14: Dichtungsaufnahme
- 15: Lippendichtung,
- 16: Schrauben
- 17: Gewinde
- 18: Aufnahmen
- 19: Dichtungen
- 20: Flossenstabilisator
- 21: Flosse
- 22: Flossendrehachse
- 23: Flossenschaft
- 24: Gehäuse

## Patentansprüche

1. Flossenstabilisator (20) mit einer schwenkbaren Flosse (21) für ein Schiff, wobei die schwenkbare Flosse (21) über mindestens ein Pendelrollenlager (1) um deren Längsachse (22) gelagert ist, wobei das Pendelrollenlager (1) einen Innenring (3), einen Außenring (4) und eine Mehrzahl von Rollen (6) umfasst, wobei Innenring (3) und Außenring (4) gemeinsam einen Wälzkörperraum (5) bilden, in dem die Rollen (6) angeordnet sind,
**dadurch gekennzeichnet, dass**
das Pendelrollenlager (1) eine Dichtungsanordnung (12) zur seitlichen Abdichtung des Wälzkörperraums (5) umfasst, wobei die Dichtungsanordnung (12) einen Dichtungsträgerabschnitt (13), der an dem Außenring (4) angeschraubt ist, und einen Dichtungsabschnitt (15) aufweist, der an dem Dichtungsträgerabschnitt (13) angeordnet ist, wobei der Dichtungsabschnitt (15) einen Dichtbereich mit dem Innenring (3) bildet, und
wobei der Wälzkörperraum (5) des Pendelrollenlagers mit Schmierfett gefüllt ist.

2. Flossenstabilisator (20) nach Anspruch 1, **dadurch gekennzeichnet, dass** der Dichtungsabschnitt (15) als eine Lippendichtung (15) ausgebildet ist, die auf dem Innenring (3) aufliegt.

3. Flossenstabilisator (20) nach Anspruch 1 oder 2, **dadurch gekennzeichnet, dass** der Dichtungsträgerabschnitt (13) einen Ringscheibenabschnitt aus Metall umfasst.

4. Flossenstabilisator (20) nach einem der vorhergehenden Ansprüche, **dadurch gekennzeichnet, dass** der Dichtungsträgerabschnitt (13) und/oder der Ringscheibenabschnitt auf der Stirnseite des Außenrings (4) aufliegt.

5. Flossenstabilisator (20) nach einem der vorhergehenden Ansprüche, **dadurch gekennzeichnet, dass** der Außenring (4) in axialer Erstreckung kürzer als der Innenring (3) ausgebildet ist.

6. Flossenstabilisator (20) nach einem der vorhergehenden Ansprüche, **dadurch gekennzeichnet, dass** die Dichtungsanordnung (12) mit dem Innenring (3) bündig abschließt oder axial nach innen versetzt angeordnet ist.

7. Flossenstabilisator (20) nach einem der vorhergehenden Ansprüche, **gekennzeichnet durch** mindestens eine umlaufende Dichtung (19) zur Abdichtung des Außenrings (4) zu einer Tragkonstruktion (24).

8. Flossenstabilisator (20) nach Anspruch 7, **dadurch gekennzeichnet dass** die umlaufende Dichtung (19) ergänzend zur Abdichtung des Dichtungsträgerabschnitts (13) zu dem Außenring (4) ausgebildet ist.

## Claims

1. Fin stabilizer (20) having a pivotable fin (21) for a ship, the pivotable fin (21) being mounted via at least one self-aligning roller bearing (1) about its longitudinal axis (22), the self-aligning roller bearing (1) comprising an inner ring (3), an outer ring (4) and a plurality of rollers (6), the inner ring (3) and the outer ring (4) together forming a rolling body space (5), in which the rollers (6) are arranged, **characterized in that** the self-aligning roller bearing (1) comprises a seal arrangement (12) for lateral sealing of the rolling body space (5), the seal arrangement (12) having a seal carrier section (13) which is screwed on the outer ring (4) and a seal section (15) which is arranged on the seal carrier section (13), the seal section (15) forming a sealing region with the inner ring (3), and the rolling body space (5) of the self-aligning roller bearing being filled with lubricating grease.

2. Fin stabilizer (20) according to Claim 1, **characterized in that** the seal section (15) is configured as a lip seal (15) which lies on the inner ring (3).

3. Fin stabilizer (20) according to Claim 1 or 2, **characterized in that** the seal carrier section (13) comprises an annular disc section made from metal.

4. Fin stabilizer (20) according to one of the preceding claims, **characterized in that** the seal carrier section (13) and/or the annular disc section lie/lies on the end side of the outer ring (4).

5. Fin stabilizer (20) according to one of the preceding claims, **characterized in that** the outer ring (4) is of shorter configuration in the axial extent than the inner ring (3).

6. Fin stabilizer (20) according to one of the preceding claims, **characterized in that** the seal arrangement (12) terminates flush with the inner ring (3) or is arranged in an axially inwardly offset manner.

7. Fin stabilizer (20) according to one of the preceding claims, **characterized by** at least one circumferential seal (19) for sealing the outer ring (4) with respect to a load-bearing construction (24).

8. Fin stabilizer (20) according to Claim 7, **characterized in that** the circumferential seal (19) is additionally configured for sealing the seal carrier section (13) with respect to the outer ring (4).

## Revendications

1. Stabilisateur à ailette (20) avec une ailette pivotante (21) pour un bateau, dans lequel l'ailette pivotante (21) est montée au moyen d'au moins un roulement à rotule (1) autour de son axe longitudinal (22), dans lequel le roulement à rotule (1) comprend une bague intérieure (3), une bague extérieure (4) et une multiplicité de rouleaux (6), dans lequel la bague intérieure (3) et la bague extérieure (4) forment ensemble une chambre de corps de roulement (5) dans laquelle les rouleaux (6) sont disposés,
**caractérisé en ce que** le roulement à rotule (1) comprend un système d'étanchéité (12) pour l'étanchéité latérale de la chambre de corps de roulement (5), dans lequel le système d'étanchéité (12) présente une partie de support de joint (13), qui est vissée sur la bague extérieure (4), et une partie de joint (15), qui est disposée sur la partie de support de joint (13), dans lequel la partie de joint (15) forme une zone étanche avec la bague intérieure (3), et dans lequel la chambre de corps de roulement (5) du roulement à rotule est remplie de graisse de lubrification.

2. Stabilisateur à ailette (20) selon la revendication 1, **caractérisé en ce que** la partie de joint (15) est formée par un joint à lèvre (15), qui s'applique sur la bague intérieure (3).

3. Stabilisateur à ailette (20) selon une revendication 1 ou 2, **caractérisé en ce que** la partie de support de joint (13) comprend une partie de disque annulaire en métal.

4. Stabilisateur à ailette (20) selon l'une quelconque des revendications précédentes, **caractérisé en ce que** la partie de support de joint (13) et/ou la partie de disque annulaire s'applique(nt) sur le côté frontal de la bague extérieure (4).

5. Stabilisateur à ailette (20) selon l'une quelconque des revendications précédentes, **caractérisé en ce que** la bague extérieure (4) est, en extension axiale, plus courte que la bague intérieure (3).

6. Stabilisateur à ailette (20) selon l'une quelconque des revendications précédentes, **caractérisé en ce que** le système d'étanchéité (12) se termine à fleur avec la bague intérieure (3) ou est disposé de façon décalée axialement vers l'intérieur.

7. Stabilisateur à ailette (20) selon l'une quelconque des revendications précédentes, **caractérisé par** au moins un joint d'étanchéité périphérique (19) pour l'étanchéité de la bague extérieure (4) par rapport à une structure de support (24) .

8. Stabilisateur à ailette (20) selon la revendication 7, **caractérisé en ce que** le joint d'étanchéité périphérique (19) est réalisé en complément pour l'étanchéité de la partie de support de joint (13) par rapport à la bague extérieure (4).
